# EUROPEAN PATENT APPLICATION

(11) **EP 1 785 318 A2**
(43) Date of publication of application: **16.05.2007**
(21) Application number: 06021754.4
(22) Date of filing: 17.10.2006
(51) Int. Cl.: B60R 21/18, B60R 22/195, B60R 22/46

(54) **Air belt apparatus for use in a motor vehicle**

(30) Priority: 10.11.2005 JP 2005326391
(71) Applicant: TAKATA CORPORATION, Minato-ku, Tokyo 106-8510 (JP)
(72) Inventor: Nezaki, Takuya, Toyota-shi Aichi 471-8572 (JP); Suyama, Yoji, Tokyo 106-8510 (JP)
(74) Representative: Banzer, Hans-Jörg

(57) **Abstract**

In order to enable a gas-supplying source (22) for operating a chest portion expansion portion (46) and a pretensioner (20) to be mounted on a limited mounting space in a motor vehicle seat (12) by commoditizing the gas supplying source (22), an air belt apparatus (10) for use in a motor vehicle includes chest-restraint webbing (16) having a chest expanding portion (46) corresponding to a chest portion (14B) of an occupant (14) at expansion, lumbar-restraint webbing (18) being pulled out from a retractor (34), and corresponding to a lumbar portion (14W) of the occupant (14), and a single gas-supplying source (22). Since the gas-supplying source (22) that supplies gas to the chest expanding portion (46) and a pretensioner (20) at a motor vehicle collision is unified and commoditized, the gas supplying source (22) can be mounted on a limited mounting space in a motor vehicle seat (12).

## Description

### [Technical Field]

The present invention relates to an air belt apparatus for use in a motor vehicle, provided with a chest expanding portion in chest-restraint webbing.

### [Background Art]

An air belt apparatus, in which tensile force generated in a shoulder belt (chest-restraint webbing) when expanded is also transmitted to a lap belt (lumbar-restraint webbing), is disclosed (refer to the patent documents Unexamined Japanese Patent Application Publication No. 2000-255358 and Unexamined Japanese Patent Application Publication No. 2001-294111).

### [Problems to be Solved by the Invention]

In addition to the aforementioned hitherto known example, it is possible to provide a pretensioner for raising the tensile force of the lumbar-restraint webbing at a collision. However, when a gas-supplying source for the pretensioner and that for a chest expanding portion are separately mounted on a motor vehicle seat in a case that the pretensioner is operated by means of gas pressure from a gas-supplying source, much mounting space for mounting the gas-supplying sources is required. In particular, when the gas-supplying sources are mounted by the side of a seat, there is a possibility that sufficient mounting space cannot be secured.

In light of the aforementioned fact of the matter, an object of the present invention is to enable the gas-supplying source for operating the chest expanding portion and the pretensioner, to be mounted on a limited mounting space in the motor vehicle seat by means of commoditizing the gas-supplying source.

### [Means for Solving the Problems]

According to the present invention, this object is achieved by an air belt apparatus as defined in claim 1. The dependent claims define preferred and advantageous embodiments of the invention.

An air belt apparatus for use in a motor vehicle of the invention is characterized in including: chest-restraint webbing having a chest expanding portion corresponding to a chest portion of an occupant at expansion; lumbar-restraint webbing to be pulled out from a retractor and corresponding to a lumbar portion of the occupant; a pretensioner for raising restraining force for the occupant by raising tensile force of the lumbar-restraint webbing by means of gas pressure at a motor vehicle collision; and a single gas-supplying source for supplying gas to the chest expanding portion and the pretensioner at the motor vehicle collision.

In the air belt apparatus for use in a motor vehicle according to an aspect of the invention, an ignition electric current is transmitted to a gas supplying source when a motor vehicle collision is detected by a sensor, the gas supplying source is activated, and gas is instantaneously blown out from the gas-supplying source. The gas is promptly supplied to the chest expanding portion and the pretensioner, and the chest expanding portion is expanded by means of gas pressure corresponding to the chest portion of the occupant. Further, the pretensioner is operated to raise tensile force of the lumbar restraint webbing, and thus restraining force for the lumbar portion is raised. By expanding of the chest expanding portion corresponding to the chest portion of the occupant, inertia force of the chest portion of the occupant at a front collision can be absorbed.

In the air belt apparatus for use in a motor vehicle, since the gas-supplying source for supplying the gas to the chest expanding portion and the pretensioner at the motor vehicle collision is unified and commoditized, the gas-supplying source can be mounted on a limited mounting space in a motor vehicle seat.

The invention according to a first preferred embodiment is characterized in that in the air belt apparatus for use in a motor vehicle the pretensioner is disposed in the retractor.

In the air belt apparatus according to the first preferred embodiment, since the pretensioner is disposed in the retractor, the mounting space can more be saved in comparison with providing the pretensioner separately from the retractor, and the tensile force of the lumbar-restraint webbing is raised at a predetermined timing, upon reducing a driving loss when operating the pretensioner.

The invention according to a second preferred embodiment is characterized in that in the air belt apparatus for use in a motor vehicle, a gas-supplying pathway is provided for connecting the chest expanding portion and the pretensioner to the single gas-supplying source.

In this air belt apparatus for use in a motor vehicle, since the chest expanding portion and the pretensioner, and the single gas-supplying source are connected by means of the gas-supplying pathway, the gas-supplying source can be disposed at a position distant from the chest expanding portion and the pretensioner, namely at a position other than, for example, the position by the side of the seat having a little mounting space. That is, since there is no need to dispose the gas-supplying source in the vicinity of the gas inlet of the chest expanding portion or in the pretensioner, the gas inlet of the chest expanding portion or the pretensioner can be prevented from being large-sized.

The invention according to a third preferred embodiment is characterized in that in the air belt apparatus for use in a motor vehicle, a single wire harness is connected to the single gas-supplying source, and the gas supplying source is activated through the wire harness.

In the air belt apparatus for use in a motor vehicle according to this embodiment, a single wire harness is connected to the single gas-supplying source, and in a case that a collision sensor provided in the motor vehicle detects a collision, an ignition electric current is transmitted to the gas-supplying source through the wire harness. By using the single gas-supplying source and the single wire harness, parts costs and assembling costs can be reduced and the mounting space can also be saved.

The invention according to a fourth preferred embodiment is characterized in that in the air belt apparatus for use in a motor vehicle, the single gas-supplying source is disposed at a lower part of a seat cushion of a motor vehicle seat.

In the air belt apparatus for use in a motor vehicle according to the fourth preferred embodiment, since the single gas-supplying source is disposed at the lower part of the seat cushion having sufficient mounting space, in the motor vehicle seat, there is no possibility that a design of the motor vehicle seat or that of a console or the like in a circumference of the motor vehicle seat is limited by mounting of the gas-supplying source. Accordingly, in a case that the air belt apparatus for use in a motor vehicle according to this embodiment is mounted on a motor vehicle, flexibility of the design of the motor vehicle seat, the console, or the like, can be maintained.

### [Advantages]

As explained above, according to an air belt apparatus for use in a motor vehicle described in the aspect of the invention with respect to the present invention, an outstanding advantage, in which a gas-supplying source can be mounted on a limited mounting space in a motor vehicle seat, can be obtained.

According to the air belt apparatus for use in a motor vehicle described in the first embodiment, an outstanding advantage, in which the mounting space can more be saved in comparison with mounting the pretensioner separately from the retractor, and the tensile force of the lumbar-restraint webbing can be raised at a predetermined timing, can be obtained.

According to the air belt apparatus for use in a motor vehicle described in the second embodiment, since the gas-supplying source can be disposed at a position distant from the chest expanding portion and the pretensioner, namely at a position other than, for example, the position by the side of the seat having little mounting space, and since there is no need to dispose the gas-supplying source in the vicinity of the gas inlet of the chest expanding portion, or in the pretensioner, the gas inlet of the chest expanding portion or the pretensioner can be prevented from being large-sized.

According to the air belt apparatus for use in a motor vehicle described in the third embodiment, an outstanding advantage, in which parts costs and assembling costs can be reduced, and a mounting space can also be saved, can be obtained.

According to the air belt apparatus for use in a motor vehicle described in the fourth embodiment, an outstanding advantage, in which there is no possibility that a design of the motor vehicle seat or that of a console or the like in a circumference of the motor vehicle seat is limited by mounting of the gas-supplying source, and flexibility of the design of the motor vehicle seat, the console, or the like can be maintained, can be obtained.

### [Brief Description of the Drawings]

Fig. 1 is an elevation showing an air belt apparatus for use in a motor vehicle.
Fig. 2 is an elevation showing a condition in the air belt apparatus for use in a motor vehicle, in which a cheat portion expanding portion is expanded and tensile force of lumbar-restraint webbing is raised.
Fig. 3 is a perspective view showing chest-restraint webbing, and a retractor therefor, lumbar-restraint webbing and a retractor therefor, a tongue plate in which the chest-restraint webbing and the lumbar-restraint webbing are respectively connected, and a buckle device.

### [Best Mode for Carrying Out the Invention]

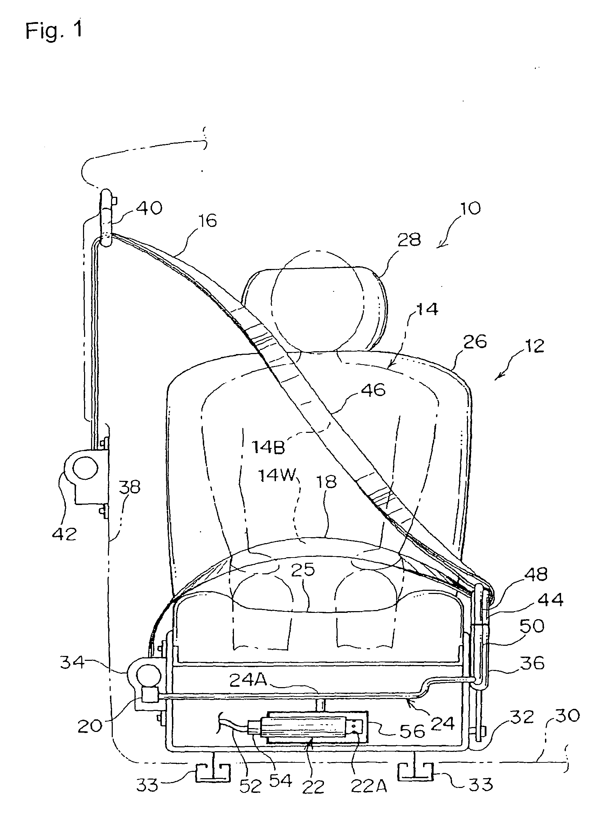

Hereinbelow, an embodiment of the present invention will be explained on the basis of the drawings. In Fig. 1, an air belt apparatus 10 for use in a motor vehicle with respect to the present embodiment is a kind of seat belt for restraining an occupant 14 seated in a motor vehicle seat 12. The air belt apparatus 10 for use in a motor vehicle includes chest-restraint webbing 16, lumbar-restraint webbing 18, a pretensioner 20, a gas-supplying source 22, and a gas-supplying pathway 24.

The motor vehicle seat 12 is provided with a seat cushion 25 in which a seat frame 32 is provided and the occupant 14 is seated, a seat back 26 for supporting a back of the occupant 14, and a headrest 28 provided above the seat back 26. The motor vehicle seat 12 is attached on a seat rail 33 provided on a floor panel 30 in a manner so as to be able to slide in a front-and-back direction of the motor vehicle. A retractor 34 is mounted on the seat frame 32 at an outside in a vehicle interior so as to be able to swing in the front-and-back direction of the motor vehicle, and in the same manner as that of the retractor 34, a buckle apparatus 36 is mounted on the seat frame 32, at an inside in the vehicle interior.

The chest-restraint webbing 16 is a belt-shaped member that corresponds to a chest portion 14B of the occupant 14, and is connected to a retractor 42 disposed in a center pillar 38 via a shoulder anchor 40 provided, for example, at an upper part of the center pillar 38. The chest-restraint webbing 16 is constantly receiving tensile force applied by the retractor 42, mainly in a retracing direction for retracting the webbing 16. The chest-restraint webbing 16 is enabled to be pulled out from the retractor 42 in accordance with a body type of the occupant 14, when the air belt apparatus 10 for use in a motor vehicle is worn. A tongue plate 44 capable of being fitted with a buckle device 36 is provided at a tip end of the chest-restraint webbing 16. Further, a chest expanding portion 46 is provided in the chest-restraint webbing 16. Incidentally, the shoulder anchor 40 is not limited to that provided at a position in the center pillar 38 at a certain height, and the same may be constructed so as for the height of the portion to be adjustable.

The chest expanding portion 46 is an air belt that corresponds to the chest portion 14B of the occupant 14 when expanded. In an ordinary use, the chest expanding portion 46 is folded back in a manner so as to have an equivalent width as that of, for example, the chest-restraint webbing 16. In addition, a folded-back condition of the chest expanding portion 46 is retained by using a control stitching, in which a seam is ruptured in a case that internal pressure at a certain degree or more is applied thereto. In other words, the folded-back condition is retained by stitching the chest expanding portion 46 using a so-called tear seam (not shown). Thus, the chest expanding portion 46 is configured such that the tear seam is ruptured in a case that a motor vehicle encounters a collision, and gas is supplied into the chest expanding portion 46 from a gas-supplying source in the buckle device 36 via a portion in the vicinity of the tongue plate 44. Further, the chest expanding portion 46 is configured to be expanded to form a bag-shaped condition from the folded-back condition.

Incidentally, the chest expanding portion 46 may be provided overlapping on the chest-restraint webbing 16 that extends from the retractor 42 to the tongue plate 44. Further, the chest expanding portion 46 may be connected to an end portion of the chest-restraint webbing 16. Namely, in the chest-restraint webbing 16, a portion corresponding to the chest portion 14B of the occupant 14 may be replaced by the chest expanding portion 46. An attaching position of the retractor 42 is not limited to the center pillar 38, and the same may be set to, for example, a back face of the seat back 26 or a vehicle body portion (not shown) at a rear side of the motor vehicle seat 12.

The lumbar-restraint webbing 18 is a so-called lap belt being pulled out from the retractor 34 mounted on the seat frame 32 at the outside in the vehicle interior, and is corresponding to a lumbar portion 14W of the occupant 14. The lumbar-restraint webbing 18 constantly receives tensile force applied by, for example, the retractor 34 mainly in a retracting direction for retracting the lumbar-restraint webbing 18, and an end portion thereof is connected to the tongue plate 44. The lumbar-restraint webbing 18 is not provided with an expanding portion, being different from the chest-restraint webbing 16.

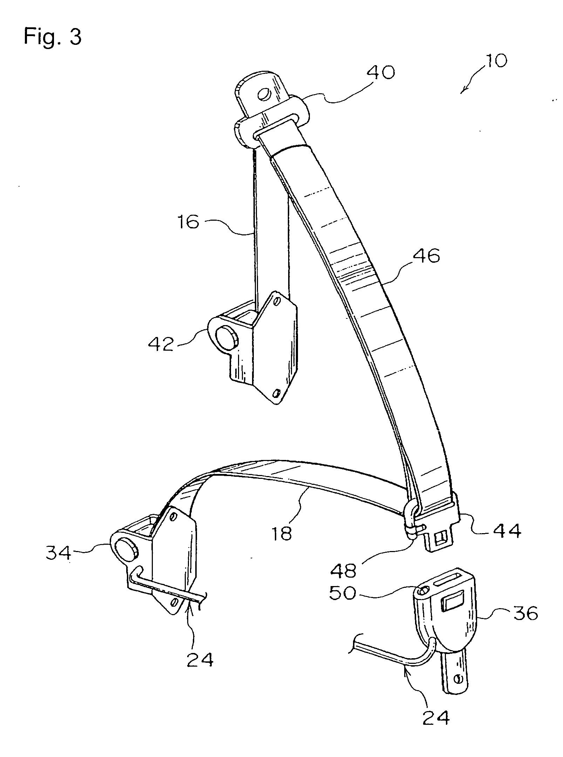

As shown in Fig. 3, a gas inlet or gas-introducing passage 48 of the chest expanding portion 46 is provided together in the tongue plate 44. Further, an insertion portion 50, into which the gas inlet 48 is fitted when the tongue plate 44 is fitted into the buckle device 36, is provided in the buckle device 36. A gas-supplying pathway 24 is connected to the insertion portion 50, so that the gas is supplied into the chest expanding portion 46 from the insertion portion 50 via the gas inlet 48, in a condition in which the tongue plate 44 is fitted into the buckle device 36.

As shown in Fig. 1, the pretensioner 20 is a device that raises restraining force for the lumbar portion 14W of the occupant 14 by raising tensile force of the lumbar-restraint webbing 18 by means of gas pressure, at a motor vehicle collision. The pretensioner 20 is disposed in the retractor 34, and the gas is configured to be supplied into the pretensioner 20 from the gas-supplying source 22 via the gas supplying pathway 24.

The gas-supplying source 22 is a device, namely, for example, an inflator for supplying gas into the chest expanding portion 46 and the pretensioner 20. The gas-supplying source 22 is provided one in number at a lower portion of the seat cushion 25 of the motor vehicle seat 12, namely, for example, in a case 56 installed on the seat frame 32. A gas-blowing outlet 22A of the gas-supplying source 22 is positioned in the case 56. The gas-supplying pathway 24 is connected to the case 56, and a portion other than the gas-supplying pathway 24 is sealed so that the gas is not leaked out.

A single wire harness 52 is connected to a single gas-supplying source 22 via a connector 54. When the gas is blown out from the gas-blowing outlet 22A by activating the gas-supplying source 22, the gas-supplying source 22 is configured to be activated by an ECU (not shown) through the wire harness 52.

The gas-supplying pathway 24 is a gas supplying pipe that connects the chest expanding portion 46 and the pretensioner 20, and the single gas-supplying source 22, and is connected to the case 56. The gas-supplying pathway 24 is caused to branch into, for example, two directions in a motor vehicle width direction at a branching point 24A, and one of the gas-supplying pathway 24 caused to branch is connected to the pretensioner 20, and the other of the gas-supplying pathway 24 caused to branch is connected to the insertion portion 50 provided together in the buckle device 36, respectively.

Incidentally, the position of the branching point 24A is determined in consideration of operation timing for the pretensioner 20 and an expanding timing for the chest expanding portion 46. For example, in a case that the gas is simultaneously supplied to the pretensioner 20 and the chest expanding portion 46, the position of the branching point 24A is preferable to be set to that in the vicinity of a middle portion between the pretensioner 20 and the gas inlet 48. Further, in a case that either one of the operation timing for the pretensioner 20 or that for the chest expanding portion 46 is daringly delayed in relation to the other, it is possible to adopt a means to form a length of the gas supplying pipe to be an uneven length or the like, by causing the position of the branching point 24A to approach a side of the pretensioner 20 or a side of a buckle device 35, or by partially folding back each of the gas-supplying pathways 24 led from the branching point 24A to the pretensioner 20 and the chest expanding portion 46, and so forth.

### (Operation)

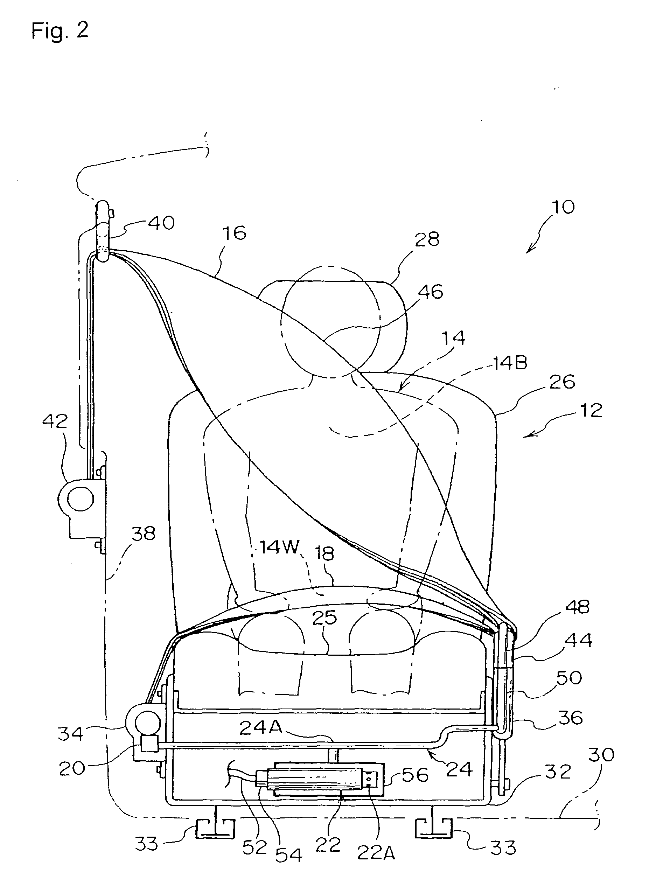

As shown in Fig. 2, in the air belt apparatus 10 for use in a motor vehicle, when a motor vehicle collision is detected by means of a sensor (not shown), an ignition electric current is transmitted from the ECU to the gas-supplying source 22, and the gas-supplying source 22 is thereby activated. Then, the gas is instantaneously blown out from the gas-blowing outlet 22A of the gas-supplying source 22 into the case 56. The gas is promptly supplied to the chest expanding portion 46 and the pretensioner 20 from the case 56 through the gas-supplying pathway 24. The chest expanding portion 46 is expanded corresponding to the chest portion 14B of the occupant 14 and the pretensioner 20 is operated by means of the gas pressure. As a result, the tensile force of the lumbar-restraint webbing 18 is raised and the restraining force for the lumbar portion 14W is thereby raised. By expanding of the chest expanding portion 46 corresponding to the chest portion 14B of the occupant 14, inertia force of the chest portion 14B of the occupant 14, generated at a front collision can be absorbed.

In the air belt apparatus 10 for use in a motor vehicle, since the gas-supplying source 22 for supplying the gas to the chest expanding portion 46 and the pretensioner 20 at a motor vehicle collision is a single gas-supplying source and is commoditized, the gas-supplying source 22 can be mounted on a limited mounting space in the motor vehicle seat 12.

Further, since the pretensioner 20 is disposed in the retractor 34, a mounting space for mounting the pretensioner 20 can more be saved in comparison with providing the pretensioner 20 separately from the retractor 34. In addition, a driving loss occurring when operating the pretensioner 20 is reduced, and the tensile force of the lumbar-restraint webbing 18 can be raised at a predetermined timing.

Furthermore, since the chest expanding portion 46 and the pretensioner 20, and the single gas-supplying source 22 are connected by means of the gas-supplying pathway 24, the gas-supplying source 22 can be disposed at a position distant from the chest expanding portion 46 and the pretensioner 20, namely a position other than, for example, the position by the side of the seat having little mounting space. That is, since there is no need to dispose the gas-supplying source 22 in the vicinity of the gas inlet 48 of the chest expanding portion 46, or in the pretensioner 20, the gas inlet 48 of the chest expanding portion 46 or the pretensioner 20 can be prevented from being large-sized.

In addition, in the air belt apparatus 10 for use in a motor vehicle, since the single gas-supplying source 22 and the single wire harness 52 are used, the number of parts can be decreased in comparison with that the gas-supplying source 22 is respectively provided in the retractor 34 and the buckle device 36. As a result, the parts costs and assembling costs can be reduced and the mounting space therefor can also be saved.

Moreover, since the single gas-supplying source 22 is disposed at a lower part of the seat cushion 25 having sufficient mounting space, in the motor vehicle seat 12, there is no possibility that a design of the motor vehicle seat 12 or that of a console or the like (not shown) in a circumference of the motor vehicle seat 12 is limited by mounting of the gas-supplying source 22. Accordingly, in a case that the air belt apparatus 10 for use in a motor vehicle is mounted on a motor vehicle, flexibility of the design of the motor vehicle seat 12, the console, or the like, can be maintained.

Incidentally, in the aforementioned embodiment, although the mounting position of the single gas-supplying source 22 is set to the lower part of the seat cushion 25, the single gas-supplying source 22 may be provided at a portion having sufficient mounting space, other than the above-described, without being limited to a lower part of the seat cushion in the air belt apparatus for use in a motor vehicle.

## Claims

1. An air belt apparatus for use in a motor vehicle (10) comprising:
chest-restraint webbing (16) having a chest expanding portion (46) corresponding to a chest portion (14B) of an occupant (14) at expansion;
lumbar-restraint webbing (18) to be pulled out from a retractor (34) and corresponding to a lumbar portion (14W) of the occupant (14);
a pretensioner (20) for raising restraining force for the occupant (14) by raising tensile force of the lumbar-restraint webbing (18) by means of gas pressure at a motor vehicle collision; and
a single gas-supplying source (22) for supplying gas to the chest expanding portion (46) and the pretensioner (20) at the motor vehicle collision.

2. The air belt apparatus for use in a motor vehicle (10) according to Claim 1, wherein the pretensioner (20) is disposed in the retractor (34).

3. The air belt apparatus for use in a motor vehicle (10) according to either one of Claims 1 or 2, wherein a gas-supplying pathway (24) is provided for connecting the chest expanding portion (46) and the pretensioner (20) to the single gas-supplying source (22).

4. The air belt apparatus for use in a motor vehicle (10) according to any one of Claims 1 through 3, wherein a single wire harness (52) is connected to the single gas-supplying source (22), and the gas supplying source (22) is activated through the wire harness (52).

5. The air belt apparatus for use in a motor vehicle (10) according to any one of Claims 1 through 4, wherein the single gas-supplying source (22) is disposed at a lower part of a seat cushion (25) of a motor vehicle seat (12).
